# EUROPÄISCHE PATENTSCHRIFT

(11) **EP 1 371 860 B1**
(45) Veröffentlichungstag und Bekanntmachung des Hinweises auf die Patenterteilung: **11.02.2009**
(21) Anmeldenummer: 03400014.1
(22) Anmeldetag: 16.04.2003
(51) Int. Cl.: F16B 5/07, F16B 5/00, E04B 1/61, E04F 15/00, H01R 13/514

(54) **Steckschiebeverschluss**
Sliding closure connector
Connecteur fermeture glissant

(30) Priorität: 24.04.2002 DE 10218713
(43) Veröffentlichungstag der Anmeldung: 17.12.2003
(73) Patentinhaber: Maus, Roland, 66709 Weiskirchen (DE)
(72) Erfinder: Maus, Roland, 66709 Weiskirchen (DE)
(74) Vertreter: Pätzold, Herbert

(56) Entgegenhaltungen:
- EP-A- 0 652 332
- DE-A- 1 509 841
- DE-A- 3 046 758
- DE-U- 20 021 779
- US-A- 5 070 662

## Beschreibung

Die Erfindung bezieht sich gemäß dem Oberbegriff des Anspruches 1 auf eine Befestigungsanordnung zur lösbaren Verbindung wenigstens zweier Bauelemente, von denen jeweils ein erstes Bauelement wenigstens eine sich über seine gesamte Länge erstreckende Ausnehmung in einer vertikalen Anschlußseite und ein zweites Bauelement wenigstens eine sich über seine gesamte Länge erstreckende, vorspringende Ausbuchtung an einer vertikalen Anschlußseite aufweist, wobei eine oder mehrere Ausnehmungen in der Anschlußseite des ersten Bauelements und entsprechend eine oder mehrere Ausbuchtungen in der Anschlußseite des zweiten Bauelements jeweils paarweise zusammenwirken, wobei der untere Teilbereich einer jeden Ausbuchtung des zweiten Bauelementes in seiner geometrischen Querschnittsform dem unteren Teilbereich einer jeden Ausnehmung des ersten Bauelementes entspricht, deren jeweils vorderer Abschnitt zur Anschlußseite des ersten Bauelementes hin nach oben geführt ist, wobei jeweils der obere Teilbereich einer Ausbuchtung und der obere Teilbereich einer Ausnehmung horizontal ausgebildet sind, und wobei jeweils zwischen einer Ausnehmung und der in sie eingesetzten Ausbuchtung zueinander ein Gleitbewegungsspiel vorhanden ist.

Die vorstehende Befestigungsvorrichtung ist im wesentlichen durch die europäische Patentanmeldung 0652 332 A1 bekannt.

Bei einer ähnlichen Befestigungsvorrichtung nach der deutschen Patentanmeldung, Offenlegungsschrift DE 3046758 A1, werden die beiden miteinander zu verbindenden Bauelemente in Zugrichtung fest fixiert und kraftaufwendig wie in einen Clip eingesteckt. Beim Lösen findet hier eine unumgängliche Materialverformung statt, die sogar zerstörend sein kann.

Der Erfingung liegt die Aufgabe zugrunde, eine formschlüssige Verbindung zwischen den Bauelementen herzustellen, wobei die Bauelemente sowohl von vorne geradlinig einsteckbar als auch von der Seite einschiebbar ausgebildet sind.

Die Aufgabe wird bei der eingangs genannten Befestigungsvorrichtung mit den kennzeichnenden Merkmalen des Anspruches 1 gelöst.

Vorteilhafte Ausführungsbeispiele der Erfindung ergeben sich aus den Unteransprüchen.
Der Erfindung liegt damit der Gedanke zugrunde, eine Befestigungsanordnung zur lösbaren Verbindung zweier oder mehrerer Bauelemente mit einem System von Ein- und Ausbuchtungen anzugeben, wobei jeweils ein erstes Bauelement mit einer oder mehreren Ausbuchtungen schienenartig ausgebildet ist, die entsprechend in eine oder mehrere Führungsausnehmungen des anderen Bauelementes selbsthaltend entweder von vorne einsteckbar oder von der Seite einschiebbar ausgebildet sind.

Die Erfindung ist nachstehend - für Ausführungsbeispiele - erläutert, die in einer Zeichnung veranschaulicht sind. Hierin zeigt:
- Abb. 1 und 2: jeweils zwei einander gegenüberliegende Bauelemente mit einer einschienigen (Abb. 1 b und 2b) und einer doppelschienigen Verbindung (Abb. 1a und 2a),
- Abb. 3: die Verbindungsstellung der doppelschienigen Bauelemente nach Abb. 1a und 2a,
- Abb. 4: die festgeklemmte Verbindungsstellung der Bauelemente nach Abb. 1 b und 2b und
- Abb. 5: drei längsseitig aneinander gereihte doppelschienige Bauelemente in ihrer gemeinsamen Verbindungsstellung.

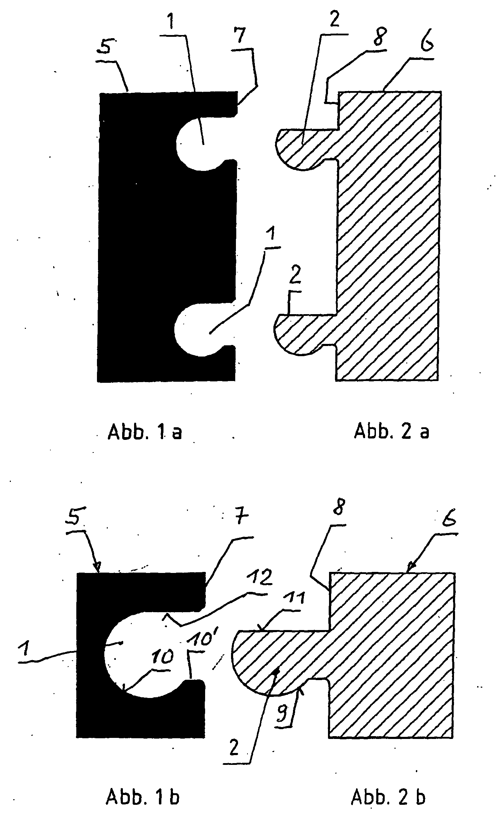

Die Abbildungen 1a und 1 b zeigen ein erfindungsgemäßes erstes Bauelement 5, das eine (Abb. 1 b) beziehungsweise zwei (Abb. 1 a) sich über seine gesamte Länge erstreckende Ausnehmungen 1 in seiner einen vertikalen Anschlußseite 7 und ein erfindungsgemäßes zweites Bauelement 6, das entsprechend wenigstens eine (Abb. 2b) beziehungsweise zwei (Abb. 2a) sich über seine gesamte Länge erstreckende vorspringende schienenartige Ausbuchtungen 2 an seiner einen vertikalen Anschlußseite 8 aufweist.

Der untere abgerundete Teilbereich 9 einer jeden Ausbuchtung 2 des zweiten Bauelementes (Abb. 2 b beziehungsweise 2a) entspricht in seiner geometrischen Querschnittsform dem unteren Teilbereich 10 einer jeden Ausnehmung 1 des ersten Bauelementes 5.

Der untere Teilbereich 10 einer jeden Ausnehmung 1 weist dabei jeweils einen vorderen Abschnitt 10' auf, der zur Anschlußseite 7 des ersten Bauelementes 5 hin nach oben geführt ist. Der obere Teilberich 12 einer jeden Ausnehmung 1 und der obere Teilberich 11 einer jeden Ausbuchtung 2 sind hingegen jeweils in Einsteckrichtung derart gradlinig (horizontal) abgeflacht ausgebildet, dass ein gradliniges Einführung der Ausbuchtung bzw. Ausbuchtungen 2 an dem zweiten Bauelement 6 in die zugehörige Ausnehmung bzw. Ausnehmungen 1 in dem anschließenden ersten Bauelement möglich ist.

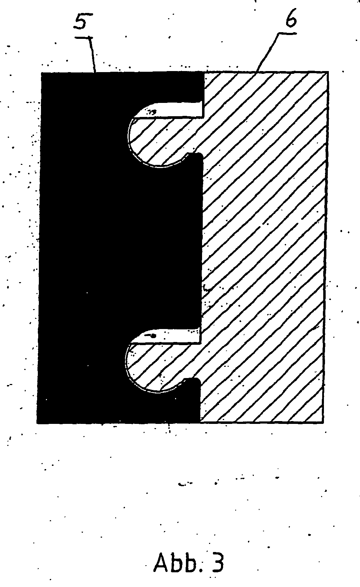

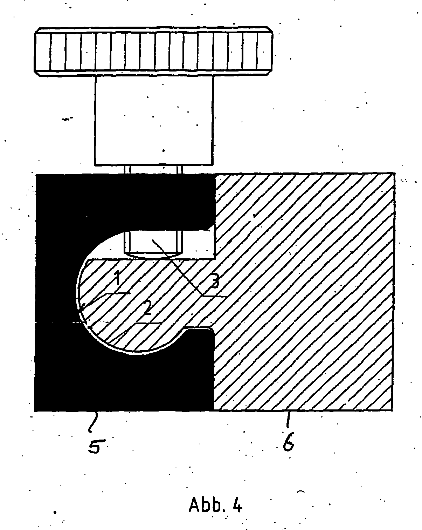

Im eingesetzten Zustand der beiden Bauelemente 5 und 6 - Abb. 3 und 4 - ist jeweils zwischen einer Ausnehmung 1 und der in sie eingesetzten Ausbuchtung 2 zueinander ein Gleitbewegungsspiel vorhanden.

Die maximale vertikale Abmessung einer jeden Ausbuchtung 2 eines ersten Bauelementes 6 für ein Einstecken von vorne in eine Ausnehmung 1 eines zweiten Bauelementes 5 ist kleiner als der vertikale Abstand zwischen dem oberen Teilberich 12 und dem oberen Ende des vorderen Abschnittes 10' einer jeden Ausnehmung 1 eines zweiten Bauelementes 5.

Durch entsprechendes Gleitbewegungsspiel kann das Bauelement 6 mit ein oder mehreren parallel zueinander liegenden schienenartigen Ausbuchtungen 2 entsprechend in einer oder mehreren entsprechend parallel zueinander liegenden Ausnehmungen 1 formschlüssig geführt werden.

Ist ein erstes Bauelement 5 vertikal festgehalten, greift der untere Teil 9' einer jeden Ausbuchtung 2 an einem zugehörigen zweiten Bauelement 6 durch sein Eigengewicht derart jeweils hinter den vorderen Abschnitt 10' der zugehörigen Ausnehmung 1 des ersten Bauelements 5 ein, dass eine formschlüssige Gleitfläche zwischen den Bauelementen 5 und 6 - Abb. 3 - gegeben ist, wobei jeweils der bzw. die vorderen Abschnitte 10'eine Trennung der Bauelemente 5 und 6 durch eine Zugbewegung entgegengesetzt zur gradlinigen Einsteckbewegung des Bauelements 6 in das Bauelement 5 verhindert. Eine Trennung der Bauelemente 5 und 6 durch ein gradliniges Herausziehen des Bauelements 6 aus seiner Steckverbindung im Bauteil 5 möglich, wenn das betreffende Bauelement 6 gegenüber dem Bauelement 5 um die vertiakle Höhe des bzw. der Abschnitte 10' angehoben ist, um so von den Abschnitten 10' frei zu kommen.

Zwei mit Gleitbewegungsspiel miteinander verbundene Bauelemente 5 und 6 sind mit Hilfe eines Arretierungsmittels, beispielsweise einer Schraube 3, feststellbar ausgebildet, die gemäß Abb. 4 von außen in eine durchgehende vertikale Bohrung im oberen Teil des Bauelementes 5 eingreift und zur Arretierung des Bauelementes 6 sich auf dem abgeflachten oberen Teilbereich 11 der Ausbuchtung 2 des Bauelementes 6 in der Ausnehmung 1 des Bauelements 5 klemmend abstützt.

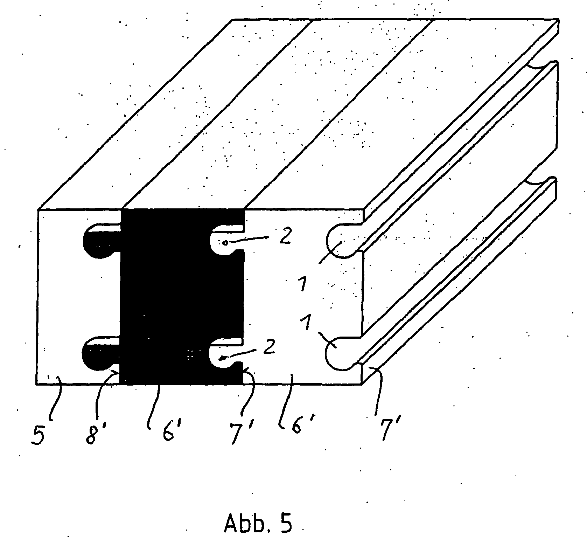

Gemäß Abb. 5 sind mehrere im Beispielsfall zwei Bauelemente 6',6' in Modulbauweise zusammengefügt, wobei die Bauelemente 6' jeweils an ihrer einen Anschlußseite 8' wenigstens eine Ausbuchtung 2 - entsprechend Abb. 2a und 2b - und jeweils in ihrer gegenüberliegenden Anschlußseite 7' wenigstens eine Ausnehmung 1 - entsprechend Abb. 1 a und 1b - aufweisen.

In Abb. 5 greift das vordere der beiden verbundenen gleichartigen Bauelemente 6', 6' zum einseitigen Abschluß in ein Bauelement 5 entsprechend Abb. 1a ein.

## Patentansprüche

1. Befestigungsanordnung zur lösbaren Verbindung wenigstens zweier Bauelemente (5,6), von denen das erste wenigstens eine sich über die gesamte Länge des Bauelements (5) erstreckende Ausnehmung (1) in einer vertikalen Anschlußseite (7) und das zweite (6) wenigstens eine sich über die gesamte Länge des Bauelements (6) erstreckende, vorspringende Ausbuchtung (2) an einer vertikalen Anschlußseite (8) aufweist, wobei eine oder mehrere Ausnehmungen (1) in der Anschlußseite (7) des ersten Bauelements (5) und entsprechend eine oder mehrere Ausbuchtungen (2) in der Anschlußseite (8) des zweiten Bauelements (6) jeweils paarweise zusammenwirken, wobei der untere Teilbereich (9) einer jeden Ausbuchtung (2) des zweiten Bauelementes (6) in seiner geometrischen Querschnittsform dem unteren Teilbereich (10) einer jeden Ausnehmung (1) des ersten Bauelementes (5) entspricht, deren jeweils vorderer Abschnitt (10') zur Anschlußseite (7) des ersten Bauelementes (5) hin nach oben geführt ist, wobei jeweils der obere Teilbereich (11) einer Ausbuchtung (2) und der obere Teilbereich (12) einer Ausnehmung (1) horizontal ausgebildet sind, und wobei jeweils zwischen einer Ausnehmung (1) und der in sie eingesetzten Ausbuchtung (2) zueinander ein Gleitbewegungsspiel vorhanden ist, **dadurch gekennzeichnet, dass** die maximale vertikale Abmessung einer jeden Ausbuchtung (2) kleiner ist als der vertikale Abstand zwischen dem oberen Teilbereich (12) und dem oberen Ende des vorderen Abschnitts (10') einer jeden Ausnehmung (1).

2. Befestigungsanordnung nach Anspruch 1, **dadurch gekennzeichnet, dass** zwei mit Gleitbewegungsspiel miteinander verbundene Bauelemente (5,6) mit Hilfe eines Arretierungsmittels (3) feststellbar ausgebildet sind.

3. Befestigungsanordnung nach Anspruch 1, **dadurch gekennzeichnet, dass** mehrere gleichausgebildete Bauelemente (6`, 6'...) in wählbarer Anzahl zu einer miteinander verbundenen Baureihe in Modulbauweise zusammenfügbar ausgebildet sind, wobei jedes der Bauelemente jeweils an seiner einen Anschlußseite (8') wenigstens eine Ausbuchtung (2) und jeweils an der gegenüberliegenden anderen Anschlußseite (7') wenigstens eine Ausnehmung (1) aufweist und wobei die Modulbaureihe abschließend an ihrer einen Anschlußseite an ein erstes Bauelement (5) und an ihrer gegenüberliegenden Anschlußseite abschließend an ein zweites Bauelement (6) anschließbar ausgebildet ist.

4. Befestigungsanordnung nach Anspruch 1, **dadurch gekennzeichnet, dass** ein oder mehrere Ausbuchtungen (2) an einem zweiten Bauelement (6) in die zugehörige bzw. zugehörigen Ausnehmungen (1) in dem anzuschließenden ersten Bauelement (5) wahlweise von vorne gradlinig einsteckbar oder von der Seite einschiebbar ausgebildet sind.

## Claims

1. Fastening arrangement for detachable connection of at least two structural elements (5, 6), of which the first has at least one recess (1) extending over the entire length of the structural element (5) in a vertical connection side (7) and the second (6) has at least one projecting bulge (2) extending over the entire length of the structural element (6) on a vertical connection side (8), wherein one or more recesses (1) in the connection side (7) of the first structural element (5) and accordingly one or more bulges (2) in the connection side (8) of the second structural element (6) respectively cooperate in pairs, wherein the lower sub-section (9) of each bulge (2) of the second structural element (6) corresponds in its geometric cross-sectional form to the lower sub-section (10) of each recess (1) of the first structural element (5), the front section (10') of which is respectively directed up towards the connection side (7) of the first structural element (5), wherein the upper sub-section (11) of a bulge (2) and the upper sub-section (12) of a recess (1) are respectively horizontal in configuration, and wherein between a recess (1) and the bulge (2) inserted into it play is respectively provided for sliding movement play relative to one another, **characterised in that** the maximum vertical dimension of each bulge (2) is smaller than the vertical spacing between the upper sub-section (12) and the upper end of the front section (10') of each recess(1).

2. Fastening arrangement according to claim 1, **characterised in that** two structural elements (5, 6) connected to one another with sliding movement play are configured to be fixed by means of a locking means (3).

3. Fastening arrangement according to claim 1, **characterised in that** a plurality of identically configured structural elements (6', 6'...) are configured to be joined in a selectable number to form an interconnected series in modular design, wherein each of the structural elements respectively has at least one bulge (2) on its one connection side (8') and respectively has at least one recess (1) on the other opposite connection side (7') and wherein the modular series is configured to connect to a first structural element (5) as closure on its one connection side and to a second structural element (6) as closure on its opposite connection side.

4. Fastening arrangement according to claim 1, **characterised in that** one or more bulges (2) on a second structural element (6) are configured to be selectively plugged rectilinearly from the front or inserted from the side into or in the associated recesses (1) in the first structural element (5) to be connected.

## Revendications

1. Ensemble de fixation pour la liaison amovible d'au moins deux éléments structurels (5, 6), dont le premier présente au moins un évidement (1) s'étendant sur toute la longueur de l'élément structurel (5) dans un côté de raccordement (7) vertical et le second (6) au moins un renflement (2) saillant, s'étendant sur toute la longueur de l'élément structurel (6) sur un côté de raccordement (8) vertical, un ou plusieurs évidements (1) dans le côté de raccordement (7) du premier élément structurel (5) et en conséquence un ou plusieurs renflements (2) dans le côté de raccordement (8) du second élément structurel (6) coopérant respectivement par paires, la zone partielle (9) inférieure de chaque renflement (2) du second élément structurel (6) dans sa forme de section transversale géométrique correspondant à la zone partielle (10) inférieure de chaque évidement (1) du premier élément structurel (5), dont la section (10') respectivement avant est guidée vers le haut vers le côté de raccordement (7) du premier élément structurel (5), respectivement la zone partielle (11) supérieure d'un renflement (2) et la zone partielle (12) supérieure d'un évidement (1) étant réalisées à l'horizontale et un jeu de mouvement de glissement étant présent respectivement entre un évidement (1) et le renflement (2) inséré dans celui-ci l'un par rapport à l'autre, **caractérisé en ce que** la dimension verticale maximale de chaque renflement (2) est inférieure à la distance verticale entre la zone partielle (12) supérieure et l'extrémité supérieure de la section (10') avant de chaque évidement (1).

2. Ensemble de fixation selon la revendication 1, **caractérisé en ce que** deux éléments structurels (5, 6) reliés entre eux avec un jeu de mouvement de glissement sont réalisés de manière à pouvoir être bloqués à l'aide d'un moyen de blocage (3).

3. Ensemble de fixation selon la revendication 1, **caractérisé en ce que** plusieurs éléments structurels (6', 6'...) réalisés de manière identique sont réalisés en un nombre sélectionnable de manière à pouvoir être assemblés pour former une série reliée entre elle en construction modulaire, chacun des éléments structurels présentant respectivement sur un côté de raccordement (8') au moins un renflement (2) et respectivement sur l'autre côté de raccordement (7') opposé au moins un évidement (1) et la série modulaire étant réalisée de manière raccordable en terminaison sur son côté de raccordement à un premier élément structurel (5) et sur son côté de raccordement opposé en terminaison à un second élément structurel (6).

4. Ensemble de fixation selon la revendication 1, **caractérisé en ce qu'**un ou plusieurs renflements (2) sur un second élément structurel (6) sont réalisés au choix de manière emboîtable par devant de manière rectiligne ou insérable depuis le côté dans le ou les évidements (1) afférent(s) dans le premier élément structurel (5) à raccorder.
